# EUROPEAN PATENT SPECIFICATION

(11) **EP 3 718 503 B1**
(45) Date of publication and mention of the grant of the patent: **26.04.2023**
(21) Application number: 18881265.5
(22) Date of filing: 23.11.2018
(51) Int. Cl.: A61C 17/02, A46B 11/06, A46B 9/04, A61C 17/08, A61C 17/22

(54) **ORAL CLEANER**
MUNDREINIGER
APPAREIL DE NETTOYAGE BUCCAL

(30) Priority: 24.11.2017 KR 20170158669
(43) Date of publication of application: 07.10.2020
(73) Proprietor: Bluereo Inc., Seoul 06247 (KR)
(72) Inventor: LEE, Seung Min, Seoul 01811 (KR)
(74) Representative: Viering, Jentschura & Partner mbB Patent- und Rechtsanwälte
(86) International application number: PCT/KR2018/014480
(87) International publication number: WO 2019/103503

(56) References cited:
- WO-A2-2011/109626
- CN-A- 106 420 089
- JP-A- 2004 097 776
- KR-A- 20090 069 391
- KR-A- 20120 088 255
- KR-B1- 101 601 725
- KR-B1- 101 639 314
- KR-B1- 101 822 645
- KR-B1- 101 822 646
- US-A- 4 124 316
- US-A- 5 301 381
- US-A1- 2017 112 603

## Description

### [Technical Field]

The present invention relates to an oral cleaner.

### [Background Art]

In general, a toothbrush is an oral hygiene tool that a user uses to remove plaque, tartar, and food debris between teeth after eating food, and the toothbrush plays a large role in preventing tooth decay, periodontal disease, gingivitis, and the like.

The toothbrush is a tool used for brushing teeth with toothpaste to manage the health of teeth and promote hygiene and cleanliness in an oral cavity. The toothbrush includes a stick-shaped handle part and a brush, and the brush is formed by densely planting thin bristles on a body formed at the tip of the handle part. To clean the teeth, the operation of rubbing the teeth with the brush of the toothbrush and removing gargling water in the oral cavity is repeatedly performed. When the user completes the tooth brushing, the user washes the interior of the oral cavity with cleaning water and spits out the gargling water.

However, the user is inconvenienced because the user needs to put the cleaning water into the oral cavity, gargle with the cleaning water, and then spit out the gargling water several times in order to wash the interior of the oral cavity after finishing the tooth brushing. In addition, because it is difficult for a disabled person, an elderly person, or a severe patient with uncomfortable mobility to brush teeth alone, these persons sometimes brush their teeth with the help of other persons. In the case of brushing teeth with the help of other persons as described above, the gargling water may flow into the throat, and a patient with a swallowing disorder may be inconvenienced during the tooth brushing because the gargling water flows into the esophagus. Accordingly, there is a need for a more convenient, hygienic, and safe tooth brushing method.

From e.g. US 5 301 381 A an oral cleaner according to the preamble of claim 1 is known. Further oral cleaners are known from, e.g., CN 106 420 089 A, WO 2011/109626 A2, US 2017/112603 A1 and US 4 124 316 A.

### [Disclosure]

### [Technical Problem]

An object is to provide an oral cleaner capable of automatically cleaning a user's oral cavity.

Another object is to provide an oral cleaner capable of simply removing suctioned dirty water.

### [Technical Solution]

The present invention provides an oral cleaner with the features according to claim 1. Further preferred embodiments of the oral cleaner are described in the dependent claims.

### [Advantageous Effects]

The oral cleaner may automatically clean the user's oral cavity.

The oral cleaner may simply remove the suctioned dirty water.

The effects of the oral cleaner are not limited to the aforementioned effects, and other effects, which are not mentioned above, may be clearly understood by those skilled in the art from the following descriptions.

### [Description of Drawings]

FIG. 1 is a transparent view of an oral cleaner.
FIG. 2 is a schematic view of the oral cleaner.
FIG. 3 is a transparent view illustrating a receptacle.
FIG. 4 is a perspective view illustrating a container.
FIG. 5 is a schematic view of the oral cleaner.

### [Best Mode]

Hereinafter, the oral cleaner will be described in detail with reference to the illustrative drawings. In denoting reference numerals to constituent elements of the respective drawings, it should be noted that the same constituent elements will be designated by the same reference numerals, if possible, even though the constituent elements are illustrated in different drawings. Further, in the following description, a detailed description of publicly known configurations or functions incorporated herein will be omitted when it is determined that the detailed description obscures the subject matters.

In addition, the terms first, second, A, B, (a), and (b) may be used to describe constituent elements of the present invention. These terms are used only for the purpose of discriminating one constituent element from another constituent element, and the nature, the sequences, or the orders of the constituent elements are not limited by the terms. When one constituent element is described as being "connected", "coupled", or "attached" to another constituent element, it should be understood that one constituent element can be connected or attached directly to another constituent element, and an intervening constituent element can also be "connected", "coupled", or "attached" to the constituent elements.

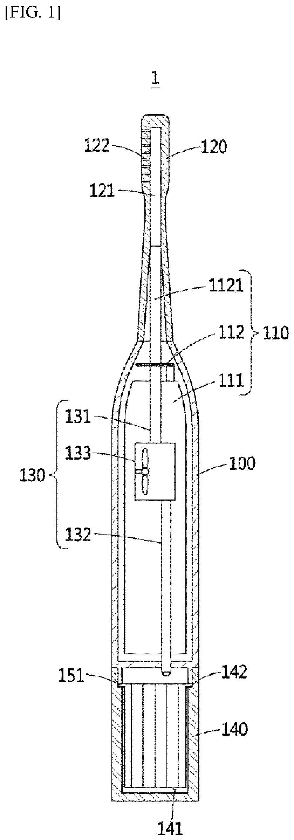

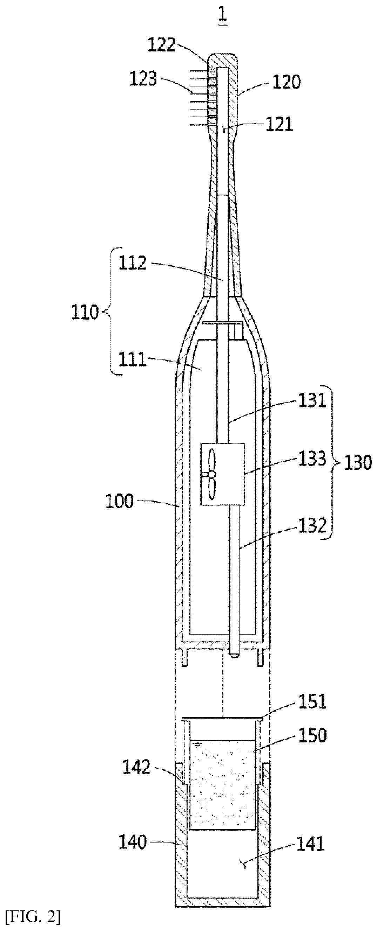

FIG. 1 is a transparent view of an oral cleaner, and FIG. 2 is a transparent view of the oral cleaner.

Referring to FIGS. 1 and 2, the oral cleaner 1 may clean an interior of a user's oral cavity. For example, the oral cleaner 1 may automatically perform both a brushing operation of rubbing the user's teeth and an operation of suctioning dirty water in the user's oral cavity, such as gargling water, and discharging the dirty water to the outside. In particular, the oral cleaner 1 suctions the dirty water in the user's oral cavity by means of hydraulic pressure and discharges the dirty water out of the oral cavity, such that the oral cleaner 1 may effectively assist in cleaning the user's oral cavity without a series of operations of spitting out the gargling water in the oral cavity. The oral cleaner 1 may be used by an individual user alone, but may also be used by a third party in order to clean an oral cavity of a user such as an old and weak person or a disabled person who is inconvenient in behavior.

In addition, the dirty water suctioned from the user's oral cavity is stored in a container 150 of the oral cleaner 1, and the dirty water is removed by replacing the container 150 after the operation of cleaning the oral cavity is completed, such that it is possible to improve a degree of cleanliness and hygiene in use and to make it easy to clean and maintain the oral cleaner 1. The oral cleaner 1 may include a housing 100, a cleaning module 110, a brush unit 120, a flow unit 130, a receptacle 140, and the container 150.

The housing 100 may define an external appearance of the oral cleaner 1. The housing 100 may be formed in the form of a handle extending in a longitudinal direction so as to be grasped by the user. The housing 100 may be made of an insulating material, for example, plastic, such that it is possible to prevent a problem of electric shock caused by electronic components disposed in the housing 100. A manipulation switch (not illustrated) may be provided on an outer surface of the housing 100 so that the oral cleaner 1 is operable.

The cleaning module 110 may be disposed in the housing 100. For example, a body part 111 of the cleaning module 110, which will be described below, may be disposed in the housing 100. Hereinafter, each configuration of the oral cleaner 1 will be described with reference to the state in which the cleaning module 110 is installed in the housing 100. The cleaning module 110 may include the body part 111 and a head part 112.

The body part 111 may include operating elements for assisting in cleaning a user's oral cavity. For example, the body part 111 may include components such as a circuit board (PCB) for operating the oral cleaner 1, a switch, a portable battery for providing electric power, a charging means, and a vibration motor for generating vibration. The body part 111 may be formed in the form of a module including the respective components. However, this is only an example, and the body part 111 may include various components for performing the operation of the oral cleaner 1.

The head part 112 may be connected to one side of the body part 111. The head part 112 may be positioned outside the housing 100 in a state in which the body part 111 is inserted into the housing 100. For example, the head part 112 may have a tip 1121 extending in a longitudinal direction out of the housing 100. The tip 1121 may be connected to the brush unit 120 to be described below, thereby connecting the body part 111 and the brush unit 120.

The brush unit 120 may be connected to the head part 112. The brush unit 120 is inserted into the user's oral cavity and may clean the user's oral cavity in the state in which the oral cleaner 1 is used. For example, the brush unit 120 may transmit vibration, generated by the cleaning module 110, to the user's teeth, thereby performing the brushing operation of rubbing the user's teeth. The brush unit 120 may include a connector 121, through holes 122, and brush bristles 123.

The connector 121 may be formed to penetrate the interior of the brush unit 120 in the longitudinal direction from one side of the brush unit 120. The through holes 122 may be formed at the other side of the brush unit 120 so as to communicate with the connector 121. Via the through holes 122, the dirty water in the user's oral cavity may be introduced into the brush unit 120, for example, the connector 121, or a cleaning liquid may be injected into the user's oral cavity. In other words, via the through holes 122 and the connector 121, a fluid flow path may be provided between the user's oral cavity and the cleaning module 110. The brush bristles 123 are provided in the through holes 122, respectively, so as to be able to rub the interior of the user's oral cavity.

The receptacle 140 may be connected to the other side of the body part 111. The receptacle 140 may be separably connected to a portion of the housing 100 where the other side of the body part 111 is positioned. For example, the receptacle 140 may be fitted with or thread-coupled to the housing 100. However, this is only an example, and a method of connecting the receptacle 140 to the housing 100 is not limited.

The receptacle 140 includes a receiving space 141 therein, and the receptacle 140 may be opened at an upper portion connected to the housing 100. The receiving space 141 of the receptacle 140 may be sealed in the state in which the receptacle 140 is connected to the housing 100. For example, the opened portion of the receiving space 141 may be sealed by the body part 111 and the housing 100 in the state in which the receptacle 140 is connected to the body part 111.

The receptacle 140 may receive the container 150 therein. In this case, the receptacle 140 may include a stepped portion 142 formed, in a stepped manner, in the portion of the receptacle 140 connected to the housing, that is, the opened portion of the receiving space 141. For example, the stepped portion 142 may be recessed, in a stepped manner, inward from an end of the receptacle 140. The container 150 inserted into the receiving space 141 may be caught by the stepped portion 142.

The container 150 may store a fluid therein. For example, the container 150 may store the cleaning liquid or store the dirty water suctioned from the user's oral cavity. The container 150 is detached from the receiving space 141 of the receptacle 140, such that the container 150 may be replaced.

The container 150 may include a bottom surface and a lateral surface extending in a height direction. The upper portion of the container 150 may be opened so that the fluid may flow. In this case, the container 150 may include a catching portion 151 protruding outward so as to be caught by the stepped portion 142 of the receptacle 140. For example, the catching portion 151 may be formed on the opened upper portion. The catching portion 151 has a diameter larger than a diameter of the stepped portion 142, such that the catching portion 151 may be caught by the stepped portion 142 in the state in which the container 150 is inserted into the receiving space 141. Therefore, the container 150 may be always maintained at a predetermined position in the state in which the container 150 is inserted into the receptacle 140.

The flow unit 130 is provided in the cleaning module 110 and may allow the fluid to flow between the brush unit 120 and the container 150. The flow unit 130 may include fluid tubes 131 and 132, and a hydraulic pump 133 that provides hydraulic pressure to the fluid tubes 131 and 132.

The fluid tubes 131 and 132 may provide flow paths for the fluid from the head part 112 to the other side of the body part 111. The fluid tubes 131 and 132 may include a first fluid tube 131 connected from the tip 1121 of the head part 112 to the hydraulic pump 133, and a second fluid tube 132 connected from the hydraulic pump 133 to the other side of the body part 111. In this case, the second fluid tube 132 may protrude toward the other side of the body part 111 and protrude out of the housing 100.

With the above-mentioned structure, pressures in the fluid tubes 131 and 132 are changed by an operation of the hydraulic pump 133, such that the fluid may flow from the through holes 122 of the brush unit 120 inserted into the user's oral cavity to the second fluid tube 132 extending to the other side of the body part 111. For example, the dirty water suctioned from the user's oral cavity via the through holes 122 may be discharged into the container 150, provided in the receptacle 140, via the connector 121, the tip 1121, the first fluid tube 131, and the second fluid tube 132. In contrast, in a state in which the cleaning liquid is provided in the container 150, the cleaning liquid may flow through the fluid tubes 131 and 132, flow to the brush unit 120, and then be injected into the user's oral cavity.

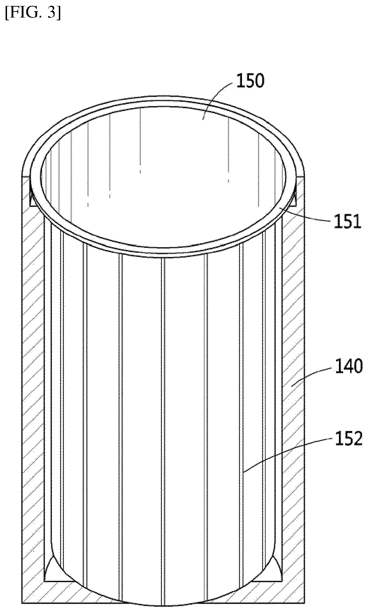

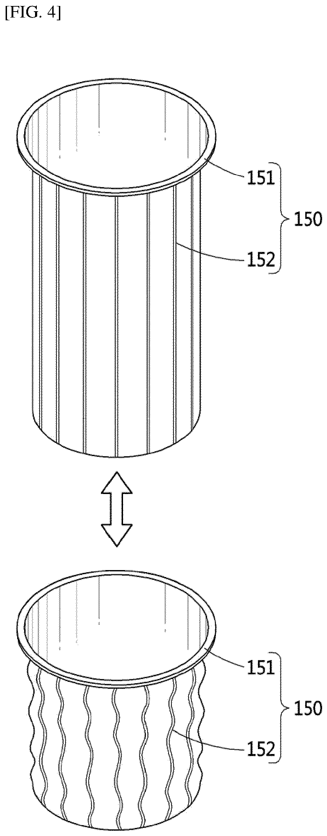

FIG. 3 is a transparent view illustrating the receptacle, and FIG. 4 is a perspective view illustrating the container.

Referring to FIGS. 3 and 4, according to the oral cleaner 1, the dirty water stored in the container 150 may be simply removed by separating the receptacle 140 from the housing 100 and replacing the container 150 seated in the receiving space 141.

The container 150 may be made of a flexible material. Therefore, the container 150 is compressed when not in use, thereby minimizing a volume thereof and thus minimizing a space for storing the container 150.

The container 150 may be made of an expandable material or extensible material. For example, the container 150 may be made of low-density polyethylene (LDPE), linear low-density polyethylene (LLDPE), medium-density polyethylene (MDPE), high-density polyethylene (HDPE), polypropylene (PP), ethylene vinyl acetate (EVA), or the like. However, the material of the container 150 is not limited. The container 150 may be made of a pure substance, a mixture made by mixing a plurality of substances at any ratio, or a reground material having different substances. In addition, the container 150 may have one layer, or a co-extrusion film or a film made by combining two or more layers.

Meanwhile, a shape of the container 150 in the height direction, that is, a length of the lateral surface of the container 150 may be maintained in a state in which no external force is applied. In other words, the container 150 may be structured so that an initially set shape of the container 150 is maintained when no external force is applied. Therefore, it is possible to prevent the container 150 from being crushed or deformed in shape during a process of inserting the container 150 into the receiving space 141 of the receptacle 140.

The container 150 may include the bottom surface, and the lateral surface formed in the height direction based on the bottom surface to define an external appearance. For example, the bottom surface may have a circular shape.

The container 150 may include a plurality of reinforcing parts 152 formed in the height direction on the lateral surface. The reinforcing parts 152 may ensure the force for maintaining the shape of the container 150 in the longitudinal direction. For example, when a part of the lateral surface is bent, the reinforcing parts 152 may be folded so that the bent portions of the lateral surface face one another. In this case, when external force is applied to the bent portions of the reinforcing parts 152 from the inside to the lateral surface, the bent portions of the reinforcing parts 152 are unfolded, such that a volume of the container 150 in a radial direction may be increased. For example, when a fluid is received in the container 150, the folded portions of the reinforcing parts 152 may be unfolded in the radial direction.

In contrast, when the external force is eliminated, the folded portions of the reinforcing parts 152 are bent to face one another, such that the reinforcing parts 152 may have shape stability in the height direction of the container 150. Therefore, the shape of the container 150 in the height direction may be maintained when the container 150 is not compressed.

Meanwhile, the reinforcing parts 152 may be formed to have a larger thickness than other portions of the lateral surface of the container 150. That is, the lateral surface of the container 150 may be divided into the reinforcing parts 152 having a large thickness, and the other portions having a small thickness. Since the reinforcing parts 152 have a larger thickness than the other portions of the lateral surface of the container 150, it is possible to enhance the force for maintaining the shape of the container against the external force applied in the height direction and to ensure the shape stability of the container 150 in the height direction.

In contrast, the reinforcing parts 152 may be formed to have higher rigidity (strength) than the other portions of the lateral surface of the container 150. That is, since the rigidity of the lateral surface of the container 150 is enhanced by the reinforcing parts 152, it is possible to improve the shape maintaining force or the shape stability of the container in the height direction.

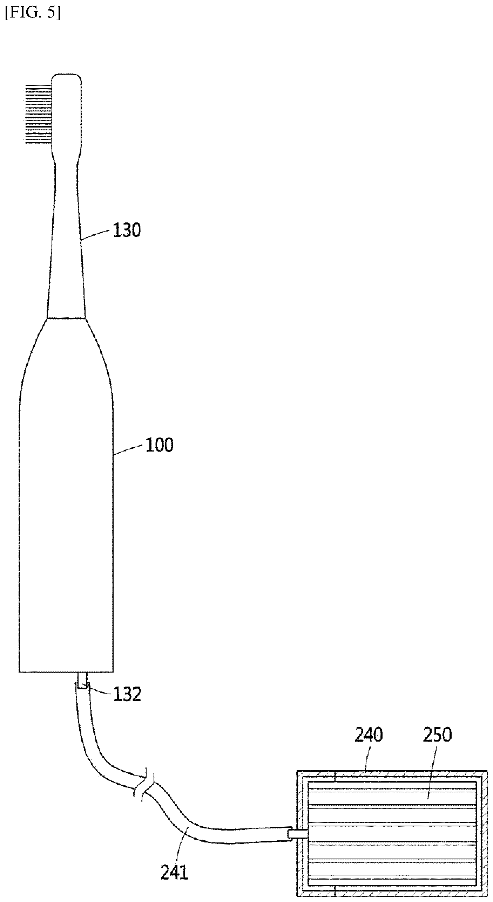

FIG. 5 is a schematic view of the oral cleaner according to a further embodiment.

Referring to FIG. 5, a receptacle 240 according to the further embodiment is not connected directly to the housing 100 but may be connected to the body through an auxiliary tube 241.

The receptacle 240 may include a receiving space therein, and the receiving space may be selectively opened or closed by a cover (not illustrated). A container 250 may be provided in the receiving space of the receptacle 240. One side of the auxiliary tube 241 may be connected to the second fluid tube 132, and the other side of the auxiliary tube 241 may be connected to the receptacle 240.

With the above-mentioned structure, the receptacle 240 may be connected to the body through the auxiliary tube 241 even when the volume of the container 250 is increased, such that it is possible to suction a larger amount of dirty water or to inject a larger amount of cleaning liquid into the user's oral cavity.

In summary, according to the oral cleaner, the receptacle may be simply connected to or separated from the body during the process of suctioning the dirty water from the user's oral cavity or injecting the cleaning liquid into the user's oral cavity, such that it is possible to reduce inconvenience during the maintenance. In particular, by simply replacing only the container from the receptacle, it is possible to easily remove dirty water while the oral cleaner is used.

### [Reference Numerals of Drawings]

1: oral cleaner
100: housing
110: cleaning module
111: body part
112: head part
120: brush unit
130: flow unit
131, 132: fluid tube
133: hydraulic pump
140, 240: receptacle
141: receiving space
142: stepped portion
150, 250: container
151: catching portion
152: reinforcing parts
241: auxiliary tube

## Claims

1. An oral cleaner (1) comprising:
a cleaning module (110) comprising a body part (111), and a head part (112) connected to one side of the body part (111);
a brush unit (120) connected to the head part (112) and to be inserted into a user's oral cavity;
a container (150;250);
a receptacle (140; 240) connected to the other side of the body part (111) and configured to receive the container (150; 250) therein; and
a flow unit (130) provided in the cleaning module (110) and configured to allow a fluid to flow between the brush unit (120) and the container (150; 250),
wherein the container (150; 250) is made of a flexible material, **characterised in that** the container comprises a plurality of reinforcing parts (152) formed in the height direction on a lateral surface of the container (150; 250) so as to reinforce for maintaining the shape of the container (150; 250) in the height direction, when no external force is applied, and
the container (150; 250) has a volume expandable in a radial direction by the reinforcing parts (152) when external force is applied from the inside to the lateral surface, and,
when a part of the lateral surface is bent, the reinforcing parts (152) are folded so that the bent portions of the lateral surface face one another

2. The oral cleaner (1) of claim 1, wherein the flow unit (130) comprises:
a fluid tube (131) disposed to provide a flow path for the fluid between the head part (112) and the body part (111); and
a hydraulic pump (133) connected to the fluid tube (131) and configured to generate hydraulic pressure.

3. The oral cleaner (1) of claim 1, further comprising:
a housing (100) into which the cleaning module (110) is inserted,
wherein the receptacle (140) is separably connected to the housing (100).

4. The oral cleaner (1) of claim 3, wherein the receptacle (140) comprises a stepped portion (142) formed, in a stepped manner, in a portion of the receptacle (140) connected to the housing (100), and the container (150) comprises a catching portion (151) protruding outward so as to be caught by the stepped portion (142) in a state in which the container (150) is received in the receptacle (140).

5. The oral cleaner (1) of claim 1, wherein a shape of the container (150; 250) in a height direction is maintained in a state in which no external force is applied.

6. The oral cleaner (1) of claim 1, wherein the reinforcing parts (152) are formed to have a larger thickness than the lateral surface of the container (150; 250).

7. The oral cleaner (1) of claim 1, further comprising:
an auxiliary tube (241) connected, at one side thereof, to the flow unit (130) and connected, at the other side thereof, to the receptacle (240).

## Patentansprüche

1. Eine Mund-Reinigungsvorrichtung (1), aufweisend:
ein Reinigungsmodul (110), das einen Körperteil (111) und einen Kopfteil (112) aufweist, das mit einer Seite des Körperteils (111) verbunden ist,
eine Bürsteneinheit (120), die mit dem Kopfteil (112) verbunden ist und in die Mundhöhle eines Benutzers einzuführen ist,
einen Behälter (150, 250),
eine Aufnahme (140, 240), die mit der anderen Seite des Körperteils (111) verbunden und eingerichtet ist, um den Behälter (150, 250) darin aufzunehmen, und
eine Flusseinheit (130), die in dem Reinigungsmodul (110) vorgesehen und eingerichtet ist, um es einem Fluid zu ermöglichen, zwischen der Bürsteneinheit (120) und dem Behälter (150, 250) zu fließen,
wobei der Behälter (150, 250) aus einem flexiblen Material hergestellt ist,
**dadurch gekennzeichnet, dass** der Behälter eine Mehrzahl von Verstärkungsteilen (152) aufweist, die in der Hochrichtung an einer Seitenfläche des Behälters (150, 250) ausgebildet sind, um zu verstärken zum Beibehalten der Form des Behälters (150, 250) in der Hochrichtung, wenn keine externe Kraft aufgebracht wird, und
der Behälter (150, 250) ein Volumen hat, das in einer Radialrichtung durch die Verstärkungsteile (152) ausdehnbar ist, wenn eine äußere Kraft von innen auf die Seitenfläche aufgebracht wird, und,
wenn ein Teil der Seitenfläche gebogen ist, die Verstärkungsteile (152) so gefaltet sind, dass die gebogenen Abschnitte der Seitenfläche einander zugewandt sind.

2. Die Mund-Reinigungsvorrichtung (1) gemäß Anspruch 1, wobei die Flusseinheit (130) aufweist:
ein Fluidrohr (131), das angeordnet ist, um einen Strömungspfad für das Fluid zwischen dem Kopfteil (112) und dem Körperteil (111) auszubilden, und
eine Hydraulikpumpe (133), die mit dem Fluidrohr (131) verbunden und eingerichtet ist, um Hydraulikdruck zu erzeugen.

3. Die Mund-Reinigungsvorrichtung (1) gemäß Anspruch 1, ferner aufweisend:
ein Gehäuse (100), in das das Reinigungsmodul (110) eingesetzt ist,
wobei die Aufnahme (140) lösbar mit dem Gehäuse (100) verbunden ist.

4. Die Mund-Reinigungsvorrichtung (1) gemäß Anspruch 3, wobei die Aufnahme (140) einen abgestuften Abschnitt (142) aufweist, der in einem mit dem Gehäuse (100) verbundenen Abschnitt der Aufnahme (140) in abgestufter Weise ausgebildet ist, und der Behälter (150) einen Fangabschnitt (151) aufweist, der nach außen vorsteht, um von dem abgestuften Abschnitt (142) in einem Zustand erfasst zu werden, in dem der Behälter (150) in der Aufnahme (140) aufgenommen ist.

5. Die Mund-Reinigungsvorrichtung (1) gemäß Anspruch 1, wobei eine Form des Behälters (150, 250) in einer Hochrichtung in einem Zustand beibehalten wird, in dem keine äußere Kraft aufgebracht wird.

6. Die Mund-Reinigungsvorrichtung (1) gemäß Anspruch 1, wobei die Verstärkungsteile (152) geformt sind, um eine größere Dicke zu haben als die Seitenfläche des Behälters (150, 250).

7. Die Mund-Reinigungsvorrichtung (1) gemäß Anspruch 1, ferner aufweisend:
ein Hilfsrohr (241), das an seiner einen Seite mit der Flusseinheit (130) und an seiner anderen Seite mit der Aufnahme (240) verbunden ist.

## Revendications

1. Nettoyeur oral (1) comprenant :
un module de nettoyage (110) comprenant une partie corps (111), et une partie tête (112) connectée à un côté de la partie corps (111) ;
une unité de brosse (120) connectée à la partie tête (112) et destinée à être insérée dans la cavité buccale d'un utilisateur ;
un récipient (150 ; 250) ;
un réceptacle (140 ; 240) connecté à l'autre côté de la partie corps (111) et configuré pour recevoir le récipient (150 ; 250) à l'intérieur ; et
une unité d'écoulement (130) prévue dans le module de nettoyage (110) et configurée pour permettre à un fluide de s'écouler entre l'unité de brosse (120) et le récipient (150 ; 250), dans lequel le récipient (150 ; 250) est fabriqué en un matériau flexible, **caractérisé en ce que** le récipient comprend une pluralité de parties de renforcement (152) formées dans la direction de la hauteur sur une surface latérale du récipient (150 ; 250) de manière à le renforcer pour maintenir la forme du récipient (150 ; 250) dans la direction de la hauteur, lorsqu'aucune force externe n'est exercée, et
le récipient (150 ; 250) a un volume expansible dans une direction radiale par les parties de renforcement (152) lorsqu'une force externe est exercée depuis l'intérieur vers la surface latérale, et,
lorsqu'une partie de la surface latérale est pliée, les parties de renfort (152) sont pliées de manière à ce que les parties pliées de la surface latérale soient en face les unes des autres

2. Nettoyeur oral (1) selon la revendication 1, dans lequel l'unité d'écoulement (130) inclut :
un tube à fluide (131) disposé pour fournir un chemin d'écoulement pour le fluide entre la partie tête (112) et la partie corps (111) ; et
une pompe hydraulique (133) connectée au tube à fluide (131) et configurée pour générer une pression hydraulique.

3. Nettoyeur oral (1) selon la revendication 1, comprenant en outre :
un logement (100) dans lequel le module de nettoyage (110) est inséré,
dans lequel le réceptacle (140) est connecté de manière séparable au logement (100).

4. Nettoyeur oral (1) selon la revendication 3, dans lequel le réceptacle (140) comprend une partie étagée (142) formée, de manière étagée, dans une partie du réceptacle (140) connectée au logement (100), et le récipient (150) comprend une partie de capture (151) faisant saillie vers l'extérieur de manière à être capturée par la partie étagée (142) dans un état dans lequel le récipient (150) est reçu dans le réceptacle (140).

5. Nettoyeur oral (1) selon la revendication 1, dans lequel une forme du récipient (150 ; 250) dans une direction de hauteur est maintenue dans un état dans lequel aucune force externe n'est exercée.

6. Nettoyeur oral (1) selon la revendication 1, dans lequel les parties de renforcement (152) sont formées pour avoir une épaisseur plus grande que la surface latérale du récipient (150 ; 250).

7. Nettoyeur oral (1) selon la revendication 1, comprenant en outre :
un tube auxiliaire (241) connecté, sur l'un de ses côtés, à l'unité d'écoulement (130) et connecté, sur son autre côté, au réceptacle (240).
